# EUROPEAN PATENT SPECIFICATION

(11) **EP 2 770 611 B1**
(45) Date of publication and mention of the grant of the patent: **12.08.2020**
(21) Application number: 13020046.2
(22) Date of filing: 27.06.2013
(51) Int. Cl.: H02K 1/27, H02K 15/03, F04D 13/06

(54) **Vacuum pump motor rotor, motor including same and vacuum pump**
Rotor eines Vakuumpumpenmotors, Motor damit und Vakuumpumpe
Rotor de moteur de pompe à vide, moteur le comprenant et pompe à vide

(30) Priority: 22.02.2013 JP 2013033584
(43) Date of publication of application: 27.08.2014
(73) Proprietor: Ebara Corporation, Ohta-ku, Tokyo 144-8510 (JP)
(72) Inventor: OJIMA, Yoshinori, Tokyo, 144-8510 (JP); INADA, Takanori, Tokyo, 144-8510 (JP); YOSHIDA, Naoya, Tokyo, 144-8510 (JP); NAKAZAWA, Toshiharu, Tokyo, 144-8510 (JP); MATAKE, Kozo, Tokyo, 144-8510 (JP)
(74) Representative: Wimmer, Hubert

(56) References cited:
- EP-A2- 0 733 804
- WO-A2-2012/113416
- JP-A- 2002 325 394
- US-A- 5 876 518
- US-A1- 2008 050 581
- US-A1- 2012 049 662

## Description

The present invention relates to a motor rotor and more particularly to a vacuum pump motor rotor, a motor including the same and a vacuum pump including the motor.

For example, in a semiconductor fabrication process, vacuum techniques are used in various steps. Raised as some of examples of such vacuum techniques are a vacuum deposition method for forming a metal film, a plasma etching process for a resist removing or etching step, an ion implantation process for an impurity diffusion step, and a low pressure CVD or plasma CVD process for a silicone oxide film or nitride film forming step. Any of these processes is performed in a vacuum (or low pressure) environment, and the role played by vacuum in the semiconductor fabrication process is very important.

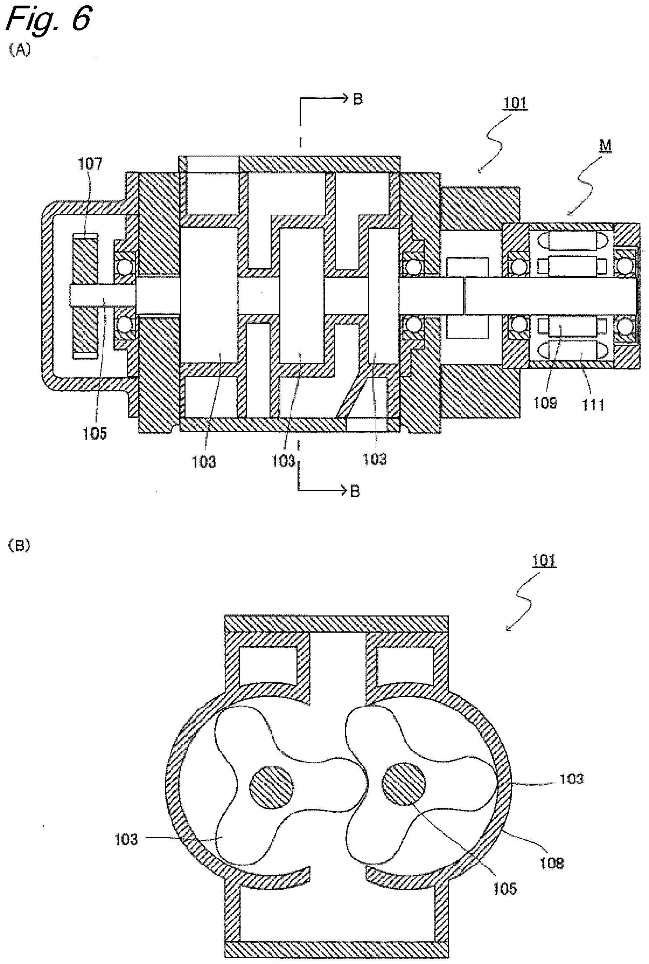

As a vacuum pump used in a semiconductor fabrication system, there is a multi-stage roots type positive displacement vacuum pump 101 as shown in Fig. 6. The vacuum pump shown in Fig. 6 is a three-stage vacuum pump 101. Namely, the vacuum pump 101 includes six pump rotors 103 in total (in Fig. 6A, however, only one pump rotor 103 is visible in each stage since two corresponding pump rotors are superposed side by side in a transverse direction in each stage). Pump rotor rotating shafts 105 of this vacuum pump 101 rotate in opposite directions to each other in the same cycle by a pair of gears 107. The rotors 103 which face each other side by side do not contact each other, and the rotors 103 so arranged do not contact their casing 108. Thus, the pump rotors 103 rotate with a slight gap held therebetween and with the casing 108 to discharge a gas to the outside.

In Fig. 6A, a motor M is placed at a right end of the vacuum pump 101. In this motor M, a motor rotor 109 is mounted on the pump rotor rotating shaft 105, and motor stators 111 are disposed around a circumference of the motor rotor 109 with predetermined gaps. In the motor M constructed in this way, the motor rotor 109 and the motor stators 111 reside in the same space. Fig. 6B is a cross-cross-sectional view taken along the pump rotor rotating shafts 105 of the vacuum pump 101. As can be seen from Fig. 6B, the pump rotors 103 having a three-cusped shape are mounted individually on the two parallel pump rotor rotating shafts 105.

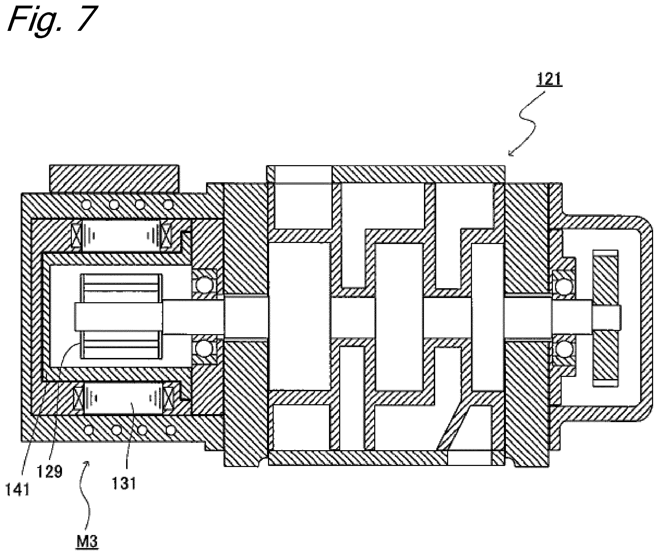

On the other hand, a vacuum pump 121 shown in Fig. 7 is an example of a vacuum pump which includes a canned motor M3 of which anticorrosion properties are enhanced. The canned motor M3 is a motor in which a motor rotor 129 is covered with a cylindrical can 141 and is held airtight or gastight without a shaft sealing construction. Namely, the motor rotor 129 is separated from motor stators 131 by interposing the cylindrical can 141 therebetween. A predetermined flange portion is formed at an open end of the can 141, and this flange portion is fixed to a motor housing which lies to face a pump rotor. Because of this, a complete gastightness is held between the motor rotor 129 and the motor stators 131.

Also, in the case of the canned motor M3, a space where the motor rotor 129 resides communicates directly with an interior space of the vacuum pump. Because of this, the motor rotor 129 is exposed directly to a gas which is exhausted in the semiconductor fabrication process. Gases used or produced in the semiconductor fabrication process contain a corrosive gas, and hence, components of the canned motor M3 need to be formed of highly anticorrosive materials and to have a highly anticorrosive construction. In particular, in a motor of a type in which permanent magnets are used, since permanent magnets themselves are corrodible, techniques for enhancing anti-rusting and anticorrosion properties of the permanent magnet are necessary.

Several techniques are proposed as techniques for enhancing the anticorrosive properties of the motor rotor. For example, in a first example, a permanent magnet is inserted to be fixed in place in a magnet insertion through hole in a rotor iron core which is formed by laminating a number of annular iron core plate materials. Under these situation, in the permanent magnet, a plurality of or two unit magnets are aligned end to end in an axial direction and are then coated with a resin into a rod-like shape. The invention of this first example is intended to prevent the deterioration of the properties of the permanent magnet to thereby prevent the reduction in performance of an electric motor by coating the permanent magnet with the resin so as to suppress the production of eddy current on the surface of the permanent magnet to thereby prevent the increase in temperature of the permanent magnet (JP 2005 94 845 A).

Additionally, in a second example, a rotor in which a plurality of disc-shaped rotor cores are laminated one on the top of the other is fixedly provided on a rotating shaft. The rotor includes a rotor core having a through hole, a magnet inserted in the through hole, a resin portion poured into the through hole and end plates which are provided at both axial end portions of the rotor core, and the magnet is in contact with the end plates (JP 4 685 661 B). The second example pays attention particularly to the sealing of the gap defined between inner surface of the through hole and the magnet.

Further, in a third example, a magnet insertion space defined in a magnet insertion bore which is opened in a rotor core is sized to be slightly larger than a permanent magnet in height, width and length dimensions. Because of this, the permanent magnet, which is inserted into the magnet insertion bore through loose fit, is embedded completely in the magnet insertion bore, and a space is formed between an inner wall surface of the magnet insertion space and a circumference of the permanent magnet. Additionally, a space is also formed at each end face of the rotor core. After the permanent magnet is inserted into the magnet insertion bore, a resin which is a non-magnetic material is filled in the spaces which cover the whole surface of the permanent magnet. By doing so, the corrosion of the permanent magnet is prevented (JP 2012 213 310 A).

As has been described heretofore, the disclosures according to the documents cited above are intended to enhance the anti-rusting properties of the permanent magnet. Namely, the disclosures are intended to provide the motor configuration in which the motor includes the rotor core which is made up of the plurality of laminated steel plates and the permanent magnet which is inserted in the through hole which penetrates the rotor core in the axial direction, and the resin is interposed in the gap defined between the coating applied to the surface of the permanent magnet and the magnet insertion through hole so as to prevent the intrusion of water which causes corrosion.

However, the inventions according to the citations described above have the following problems. Namely, in any of the citations, silicone steel plates are used as a material for the laminated disc-shaped rotor cores. When observing the silicone steel plates microscopically, gaps are produced between the adjacent silicone steel plates due to undulation produced in surfaces of the silicone steel plates. Water and corrosive gas pass through the gaps to intrude into the through hole where the permanent magnet is inserted to be placed.

When an anticorrosion treatment is applied to the surface of the permanent magnet and the resin is filled in the gap between the permanent magnet and the magnet insertion through hole, there is caused no such situation that the permanent magnet is exposed directly to water and corrosive gas. However, the anticorrosion film and the resin film are very thin. Because of this, when a flaw or pinhole exists in the surface of the permanent magnet and the resin, water and corrosive gas pass therethrough, whereby a rusting or corrosion of the material of the permanent magnet is occured. Thus, the disclosures according to the citations described above cannot provide sufficient anti-rusting or anticorrosion properties in this respect.

Further, reference is made to WO 2012 113 416 A2, which relates to a module for a rotor of an electric machine, the rotor being excited by means of permanent magnets and rotating in a fluid medium, wherein the module contains a cylindrical, active part which has a plurality of circular soft-magnetic laminations combined to form a laminate stack and having a central opening for receiving a rotor shaft, wherein at least two permanent magnets, protected from the liquid medium, are arranged in at least two corresponding cutouts in the laminate stack, and wherein the cutouts are formed beneath a cylindrical circumferential surface of the laminate stack. JP 2002 325 394 A relates to efficiently cooling the iron core of a rotor by providing a cooling path formed between the outer periphery of a rotor shaft and the inner surface of an iron core of the rotor, and a path leading a refrigerant to the refrigeration path via the rotor shaft.

The invention has been made in view of the problem described above. In accordance with the invention, a motor rotor according to the independent claims has been provided. Further embodiments are inter alia disclosed in the dependent claims. According to a first aspect of the invention, there is provided a motor rotor for use in a motor for driving a pump rotor rotating shaft of a vacuum pump inter alia including a rotor core made up of a plurality of steel plates which are laminated in an axial direction and having a through hole, a permanent magnet which is disposed in the through hole and end plates which are attached individually to axial end portions of the rotor core, wherein an adhesive is applied to a whole surface of each of the plurality of steel plates, and the plurality of steel plates are surface joined to each other and to the end plates via the adhesive. By adopting this configuration, gaps existing between the laminated steel plates are eliminated from between the steel plates by the adhesive applied thereto. At the same time, the end plates at the end portions of the motor rotor are also surface bonded to the corresponding steel plates by the adhesive, whereby the through hole into which the permanent magnet is inserted is made completely gastight by the laminated steel plates. This enables the permanent magnet residing in the through hole to be completely shut out of the external atmosphere (water and corrosive gas), whereby the effectiveness of the anti-rusting or anticorrosion properties is increased in a more ensured fashion.

According to a second aspect of the invention, a configuration is adopted in which the adhesive is also applied to a whole of a joining surface of each of the end plates before the end plates are joined to the steel plates. By adopting this configuration, in addition to the working effect provided by the first aspect of the invention, the adhesive is allowed to be interposed between the outermost steel plates at the end portions of the rotor core and the corresponding end plates.

In addition, according to a third aspect of the invention, a configuration is adopted in which the steel plates of the rotor core are silicone steel plates. By adopting this configuration, in addition to the working effect provided by the first or second aspect of the invention, a low iron loss required on an electromagnetic steel plate can be realized by reducing the specific electric conductivity without deteriorating the high permeability provided by pure iron.

Additionally, according to a fourth aspect of the invention, a configuration is adopted in which the motor rotor is attached to an end portion of a pump rotor rotating shaft. By adopting this configuration, in addition to the working effect provided by any of the first to third aspects of the invention, the pump rotor rotating shaft can be rotated directly by the motor, and therefore, the construction of the motor rotor becomes simple.

According to a fifth aspect of the invention, a configuration is adopted in which the end plates are non-magnetic metal plates or resin plates. By adopting this configuration, in addition to the working effect provided by any of the first to fourth aspects of the invention, since the end plates are made up of the non-magnetic material, there is caused no such situation that a flux path is formed into the interior of the end plates, whereby a flux path is formed in stator cores with good efficiency, thereby no motor properties being damaged.

In addition, according to a sixth aspect of the invention, a configuration is adopted in which an axial length of the permanent magnet is shorter than an axial length of the rotor core, a predetermined end portion gap is formed between each end plate and the permanent magnet, and the adhesive is filled in the gaps. Additionally, according to a seventh aspect of the invention, the adhesive is filled in the gap between the through hole and the permanent magnet. By adopting these configurations, in addition to the working effect provided by any of the first to fifth aspect of the invention, the adhesive is filled in the gap between the through hole of the rotor core and the permanent magnet and the gap between the permanent magnet and both the end plates, whereby the space is sealed. Thus, even though a pinhole or the like is made in the steel plate main body in which the steel plates are laminated for some reason, allowing water or corrosive gas to intrude into the interior of the rotor core, the adhesive surrounding the permanent magnet interrupts the intrusion of water or corrosive gas into the permanent magnet. Because of this, an advantage is provided that neither rust nor corrosion is produced in the permanent magnet. Additionally, by sealing the permanent magnet with the adhesive not with the resin, the silicone steel plates and the permanent magnet are connected together strongly and rigidly at the gap due to the nature of the adhesive.

According to an eighth aspect of the invention, a configuration is adopted in which the adhesive is an anaerobic adhesive, a heat curable adhesive or a two component reaction curable adhesive. By adopting this configuration, in addition to the working effect provided by any of the first to seventh aspects of the invention, the adhesive has not yet cured when the permanent magnet is inserted into the through hole in the rotor core but is allowed to cure after the permanent magnet has been inserted into the through hole, thereby making it possible to fill a sufficient amount of adhesive in the gap. Additionally, since the anaerobic adhesive cures on an iron member in such a state that air is shut off, there is no such situation that the permanent magnet is exposed to a high melting temperature (of the order of several hundreds of degrees) as done when a resin is filled. Thus, the permanent magnet is not influenced by the curing temperature of the adhesive filled. In addition, in the case of the two component reaction curable adhesive, since the adhesive cures at a curing temperature of the order of 100 degrees C, the permanent magnet is not influenced by the curing temperature of the adhesive filled, either.

In addition, according to the invention, a configuration is adopted in which the adhesive which cures after the steel plates have been laminated is sealed with a resin impregnated additive. By adopting this configuration, in addition to the working effect provided by any of the first to eighth aspects of the invention, although there may be caused a pinhole when the steel plates are laminated and bonded together for some reason, the pinhole so caused can be sealed with the liquid resin impregnated in the additive.

According to a ninth aspect of the invention, a configuration is adopted in which at least part of a surface of the motor rotor is coated with a corrosion preventive film. By adopting this configuration, in addition to the working effect provided by any of the first to ninth aspects of the invention, the steel plates themselves can be prevented from rusting or corroding.

Additionally, according to a tenth aspect of the invention, a configuration is adopted in which a surface of the permanent magnet is coated with a rust preventive film or a corrosion preventive film. By adopting this configuration, in addition to the working effect provided by any of the first to ninth aspects of the invention, a further improvement in resistance to rusting or resistance to corrosion can be realized.

In addition, according to an eleventh aspect of the invention, a configuration is adopted in which the rusting preventive or corrosion preventive film applied is made up of a plurality of layers of films, and a non-pinhole coating is applied to at least one layer thereof with a film prepared by a CVD method using an anticorrosion resin. By adopting this configuration, in addition to the working effect provided by the eleventh aspect of the invention, even in the event that water or a corrosive gas intrudes into the interior of the rotor core, the water or corrosive gas is not allowed to contact the permanent magnet, and therefore, it is possible to prevent the production of rust or corrosion.

According to a twelfth aspect of the invention, there is provided a motor including the motor rotor according to any of the first to eleventh aspects of the invention and motor stators which are disposed around the motor rotor at predetermined intervals. By adopting this configuration, even in the event that the motor rotor is disposed, for example, in a corrosive gas atmosphere, the motor rotor has the high anticorrosion properties.

According to a thirteenth aspect of the invention, there is provided a canned motor including the motor according to the twelfth aspect of the invention and a can disposed between the motor rotor and the motor stators. By adopting this configuration, the area where the motor rotor is provided and the area where the motor stators are provided are separated from each other, this obviating the necessity of applying an anticorrosion treatment to the motor stators.

According to a fourteenth aspect of the invention, there is provided a vacuum pump including the motor according to the twelfth aspect or the canned motor according to the thirteenth aspect of the invention. By adopting this configuration, the vacuum pump is realized which is superior in resistance to rusting and resistance to corrosion.
Fig. 1 shows a motor rotor according to an embodiment of the invention. Here, Fig. 1A is a cross-sectional view of the motor rotor taken along the line A-A in Fig. 1B, Fig. 1B is a cross-sectional view of the motor rotor taken along the line B-B in Fig. 1A, and Fig. 1C is a left side view of the motor rotor as seen in the direction of the line C-C in Fig. 1B.
Fig. 2 is a cross-sectional view of a permanent magnet disposed in a through hole of the motor rotor disclosed in Fig. 1.
Fig. 3 is an exploded perspective view of the motor rotor disclosed in Fig. 1.
Fig. 4 shows enlarged cross-sectional views of respective portions of the motor rotor shown in Fig. 1, in which Fig. 4A shows a portion denoted as 4A in Fig. 1, Fig. 4B shows a portion denoted as 4B in Fig. 1, and Fig. 4C shows a portion denoted as 4C in Fig. 1.
Fig. 5 shows a canned motor including the motor rotor disclosed in Fig. 1, in which Fig. 5A is a cross-sectional view of the canned motor taken along the direction of an axis of a pump rotor rotating shaft, and Fig. 5B is a cross-sectional view of the canned motor taken along the line VI-VI in Fig. 5A.
Fig. 6 shows cross-sectional views of a general multi-stage roots type positive displacement vacuum pump, in which Fig. 6A is a cross-sectional view of the vacuum pump taken along the direction of an axis of a pump rotor rotating shaft, and Fig. 6B is a cross-sectional view of the vacuum pump taken along the line B-B in Fig. 6A.
Fig. 7 is a cross-sectional view of a vacuum pump incorporating a canned motor taken along the direction of an axis of a pump rotor rotating shaft.

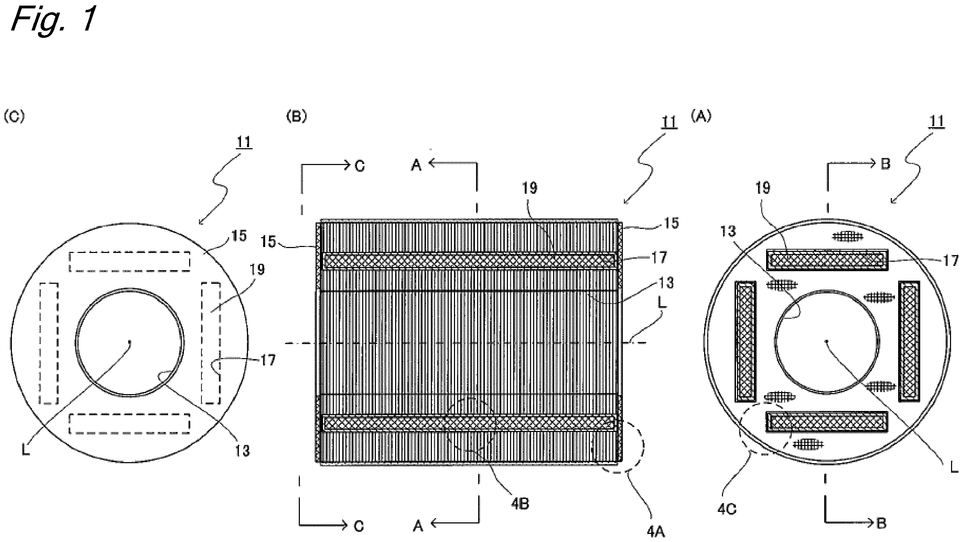

Fig. 1 shows a motor rotor 11 according to an embodiment of the invention. Here, Fig. 1A is a cross-sectional view of the motor rotor taken along the line A-A in Fig. 1B, Fig. 1B is a cross-sectional view of the motor rotor taken along the line B-B in Fig. 1A, and Fig. 1C is a left side view of the motor rotor as seen in the direction of the line C-C in Fig. 1B. The motor rotor 11 has a cylindrical shape as a whole, and a through bore portion 13 having a circular cross section is formed in an interior of the motor rotor 11. A pump rotor rotating shaft, which will be described later, is inserted into this through bore portion 13. Annular end plates 15 are attached to axial end portions of the motor rotor 11. The end plates 15 have almost the same shape as a cross-sectional shape of the motor rotor 11.

In addition, through holes 17 having a rectangular cross section are formed along an axial direction in the motor rotor 11. The through holes 17 are formed so as to extend along the entire length of the motor rotor 11 in the axial direction. Permanent magnets 19 having a rectangular cross section are inserted to be disposed in the through holes 17. The cross section of the through hole 17 into which the permanent magnet 19 is inserted is made slightly larger than that of the permanent magnet 19 in width and length dimensions, so that a predetermined gap is defined between the inner surface of the through hole 17 and the permanent magnet 19. Additionally, an adhesive is filled in this gap to cure therein. It should be noted that there is imposed no specific limitation on the cross-sectional shape of the permanent magnet 19 and hence, the permanent magnet 19 may take any cross-sectional shape including a square, circular, oval or triangular shape.

In this embodiment, four permanent magnets 19 are provided. Specifically, as shown in Fig. 1A or 1C, the permanent magnets 19 are disposed at equal angular intervals (of 90 degrees) in such a manner that long sides of a rectangular cross section are oriented in a direction which is perpendicular to a radial direction of the motor rotor 11. Because of this, the long sides of the rectangular cross section of the permanent magnets 19 which lie adjacent to each other are perpendicular to each other, while the long sides of the rectangular cross section of the permanent magnets 19 which lie to face oppositely each other across an axis L become parallel to each other. It should be noted that the number of permanent magnets 19 described above is only an example, and hence, the number of permanent magnets 19 may be two or more than four. Additionally, although the permanent magnets 19 of this embodiment have a length which is almost the same as the axial length of the motor rotor 11, the invention is not limited thereto. Specifically, each permanent magnet 19 for one through hole 17 can be provided with the plurality of magnets. In one example, the axial length of the permanent magnet 19 is made to be on the order of a quarter the axial length of the motor rotor 11, and four permanent magnets are disposed in one through hole 17. Because of this, when applied to the motor rotor 11 of this embodiment, in total, 16 divided permanent magnets 19 are used.

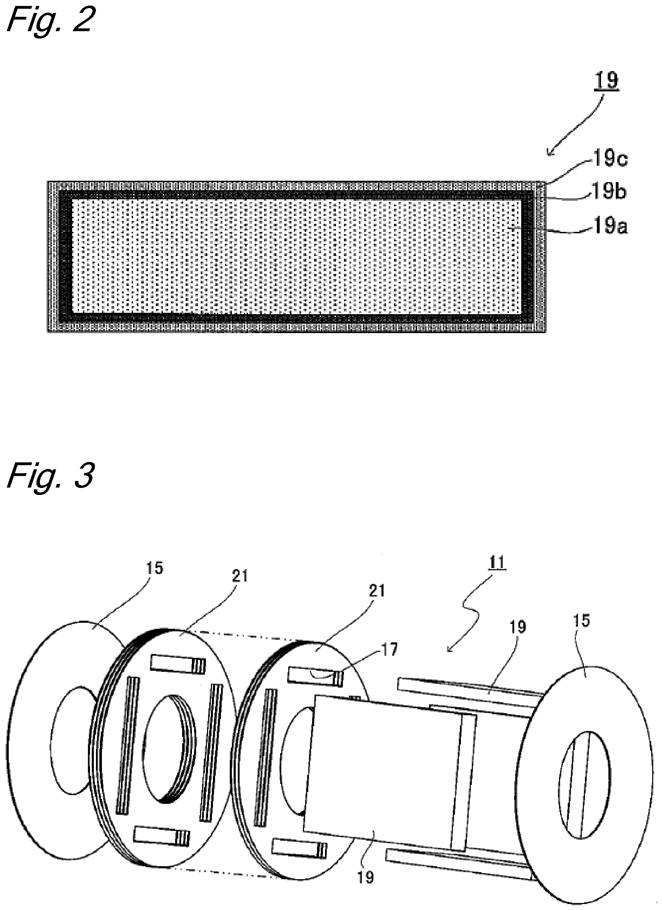

Fig. 2 is a cross-sectional view of the motor rotor 11 showing the permanent magnets 19 which are taken along a direction which is perpendicular to the axial direction thereof. As shown in Fig. 2, a permanent magnet main body 19a is disposed in an innermost position, and a predetermined surface treatment is applied to an outer side of the permanent magnet main body 19a. Specifically, firstly, a nickel plating layer 19b is formed on a surface of the permanent magnet main body 19a, and further, a thin-film resin layer 19c is formed on the nickel plating layer 19a as a pinhole seal treatment by a CVD method. This is a so-called non-pinhole coating in which no pinhole is produced in the resin layer itself. By above process, the surface treatment involving the two layers is applied to the surface of the permanent magnet main body 19a. However, this surface treatment is only one of examples of surface treatments to be applied, and therefore, no surface treatment may be applied or a surface treatment involving only one layer or three or more layers may be applied to the permanent magnet main body 19a.

Fig. 3 is an exploded perspective view of the motor rotor 11 according to the embodiment. In Fig. 3, for the sake of better understanding of what is depicted therein, annular steel plates 21 which make up the rotor core are shown only partially. In actual member, a number of steel plates 21 are laminated to thereby form a cylindrical rotor core as described above. In this connection, in Fig. 3, three or four steel plates 21 are depicted as being laminated at both end portions of the rotor core. Silicone steel plates are used as an example of a material for the annular steel plates. When used as a material for the rotor core, silicone steel plates 21 can form a flux path as required. However, the material of the annular steel plates 21 is not limited to the silicone steel plates 21, and hence, any material can be used, provided that the material can form a flux path as required. It should be noted that there is a possibility that a pinhole is produced in an adhesive cured between the silicone steel plates 21. As this occurs, a resin impregnated material may be used to seal the pinhole.

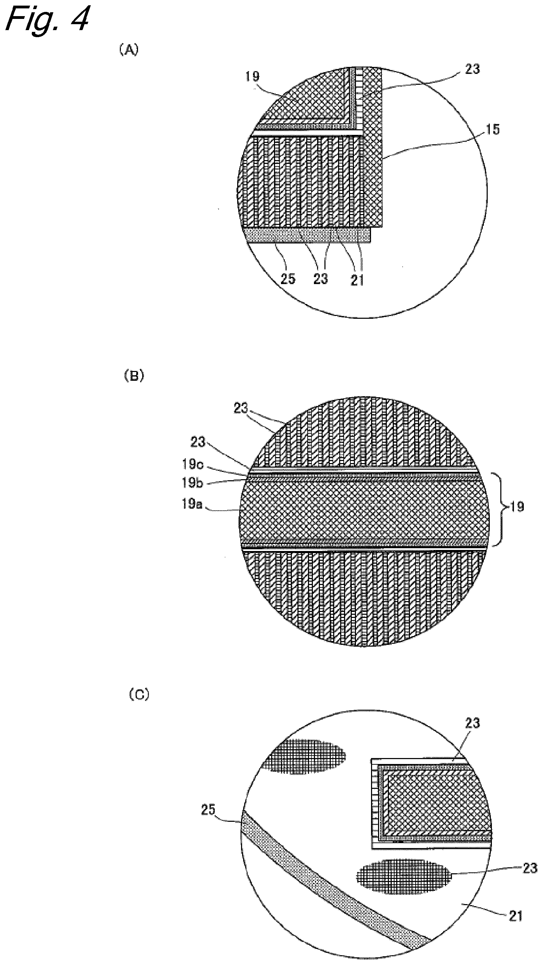

Fig. 4 shows enlarged cross-sectional views of respective portions of the motor rotor 11 shown in Fig. 1, in which Fig. 4A shows a portion denoted as 4A in Fig. 1, Fig. 4B shows a portion denoted as 4B in Fig. 1, and Fig. 4C shows a portion denoted as 4C in Fig. 1. Firstly, Fig. 4A shows an axial end portion of the motor rotor and the end plate 15. An adhesive 23 is applied to a whole area over both sides of each of the silicone steel plates 21 in advance. Then, after the silicone steel plates 21 are laminated in an axial direction, the silicone steel plates 21 are heated while applying a load thereto in the axial direction. By doing so, the adhesive 23 is cured, whereby a rotor core is formed. As a result, as shown in Fig. 4A, even though undulation is remained in the silicone steel plates 21, the adhesive 23 is filled completely in gaps between the adjacent silicone steel plates 23 so as to be in surface contact with the adjacent silicone steel plates 21. Because of this, there is caused no such situation that water or corrosive gas intrudes between the silicone steel plates 21.

The adhesive 23 also exists between the silicone steel plates 21 at the end portions of the rotor core and the corresponding end plates 15. The adhesive 23 is the adhesive applied to the surface of each of the silicone steel plates 21. Because of this, even in the event that a gap is remained between the silicone steel plates 21 and the corresponding end plates 15 due to undulation, the adhesive 23 is allowed to exist in the gap to fill the gap. It should be noted that the adhesive may be applied to a whole of the bonding surface of each of the end plates before the rotor core is built up. Additionally, a corrosion preventive film 25 made from resin may be applied to an outer circumferential surface of the rotor core. Although various resins can be considered to be used for such a corrosion preventive film, in this embodiment, an epoxy resin is used. It should be noted that the application of the corrosion preventive film made from the epoxy resin is not limited to the outer circumferential surface of the rotor core. Namely, the corrosion preventive film may be formed on an inner circumferential surface of the through bore portion 13 (refer to Fig. 1) into which the pump rotor rotating shaft is inserted and the surface of the end plates 15. Further, the corrosion preventive film may be formed on not part of the rotor core but on a whole surface of the rotor core.

Additionally, in this embodiment, the permanent magnet 19 is formed so as to be slightly shorter than an axial length of the rotor core. Then, as shown in Fig. 4A, the permanent magnet 19 is positioned in the through hole 17 in the rotor core so that a slight gap is defined between an end portion of the permanent magnet 19 and the end plate 15. The adhesive 23 also exists in the gap. In this embodiment, an anaerobic adhesive is filled to be cured in this gap. However, as long as the gaps defined between the end plates 15 and the corresponding end portions of the permanent magnet 19 can be sealed in an ensured fashion, a configuration may be adopted in which the length of the permanent magnet 19 is made almost equal to the axial length of the rotor core to thereby form no such gaps.

In addition, Fig. 4B shows the permanent magnet 19 as being placed in the through hole 17 in the rotor core. As shown in Fig. 4B, the nickel plating layer 19b is formed on the outer surface of the permanent magnet main body 19a, and further, the thin-film resin layer 19c, which is the corrosion preventive film, is formed on an outer surface of the nickel plating layer 19b. Further, as described above, the adhesive 23 is filled to be cured in the gap defined between the permanent magnet (actually, the thin-film resin layer) 19 and the inner surface of through hole 17. Because of this, the adhesive is filled around the permanent magnet 19 and in the gaps reaching to the permanent magnet 19, whereby the permanent magnet 19 is completely shut out of water and corrosive gas.

Further, Fig. 4C shows the cross section of the permanent magnet 19, the surface of the silicone steel plate 21 and a cross section of the epoxy resin film 25. The adhesive 23 is applied to the whole surfaces of the silicone steel plates 21, and when the silicone steel plates 21 which lie adjacent to each other are joined together, the adhesives 23 on both the silicone steel plates 21 are filled in the gap defined between the adjacent silicone steel plates 21. The application of the adhesive 23 to the whole surface of each of the silicone steel plates 12 is not necessary, and hence, in the event that the adhesive is applied so as to surround a circumferential portion of the permanent magnet 19, it is possible to prevent the permanent magnet 10 from rusting or corroding. The adhesive used in this embodiment is the anaerobic adhesive. The anaerobic adhesive is such as to be cured in the environment in which an iron system material exists with air shut off. Because of this, the anaerobic adhesive starts to be cured by laminating the silicone steel plates together with air shut off.

The adhesive 23 is not limited to the anaerobic adhesive, and hence, the heat curable adhesive or the two component reaction curable adhesive may be used. Either of the adhesives is the adhesive which starts to be cured after the silicone steel plates 21 have been laminated together. Because of this, the adhesive 23 is allowed to be filled in between the silicone steel plates 21 after they have been laminated together in an ensured fashion. In addition to the characteristics that have been described heretofore, when compared with the conventional technique in which a molten resin is used (in which case the rotor core needs to be heated to on the order of several hundreds of degrees C), the heat curable adhesive can be cured by being heated to on the order of 100 degrees C. Because of this, the permanent magnet can be prevented from being adversely affected by being heated to a higher temperature. Additionally, in the case of the anaerobic adhesive or the two component reaction adhesive being used for the adhesive 23, no heating is necessary, and hence, it does not have to be taken into consideration that the permanent magnet is adversely affected by being heated. It should be noted that the different adhesives can be used in the different locations. For example, there is an approach in which the heat curable adhesive having a high adhesive force is used to surface bond the silicone steel plates 21 together, while the anaerobic adhesive is used around the permanent magnet.

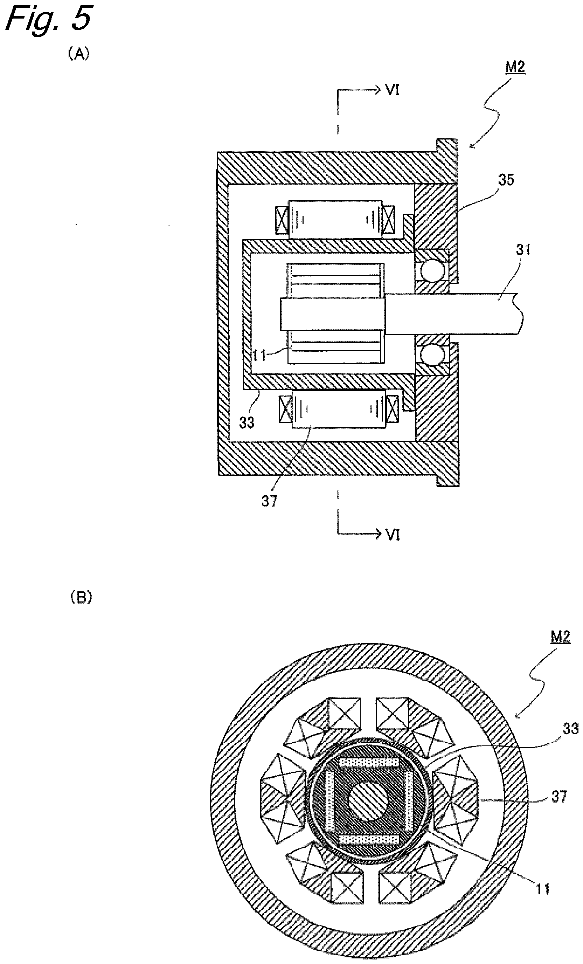

Fig. 5 shows cross-sectional views of a canned motor M2. As shown in Fig. 5, a motor rotor 11 is attached to an end portion of a pump rotor rotating shaft 31. In addition, a cylindrical can 33 is provided so as to cover the motor rotor 11. The can 33 is closed at one end (a left end in the figure) and is opened at the other end (a right end in the figure) thereof. A flange portion is formed at the other end of the can 33 extending radially outwards. This flange portion is fixed to a motor housing 35. A predetermined gap is defined between the motor rotor 11 and the can 33. By adopting this configuration, a space (an interior of the can 33) where the motor rotor 11 is placed and a space (an exterior of the can 33) where motor stators 37 are placed are completely separated by the can 33 and the motor housing 35.

The motor stators 37 is made up of a stator core and a stator coil. Then, the motor rotor 11 rotates by means of a magnetic force generated by the motor stators 37. As shown in Fig. 5B which is a cross-sectional view taken along the line VI-VI in Fig. 5A, six motor stators 37 are provided around an outer circumferential surface of the can 33. However, the number of motor stators 37 is only one example, and hence, the number of motor stators 37 may be smaller than six or larger than six. It should be noted that even in the event that a corrosive gas or the like intrudes into the space where the motor rotor 11 is placed, the corrosive gas is prevented from reaching the motor stators 37 by the can 33. Consequently, in the case of the canned motor M2, the rust proof properties or anticorrosion properties are less required on the motor stators 37 than on the motor stators of the motor in which the motor rotor and the motor stators exist in the same space.

As an example of an application, the invention can be applied to a vacuum pump which produces vacuum in a semiconductor fabrication system.

4A, 4B, 4C enlarged portion; 11 motor rotor; 13 through bore portion; 15 end plate; 17 through hole; 19 permanent magnet; 19a permanent magnet main body; 19b nickel plating layer; 19c corrosion preventive layer (thin-film resin layer); 21 silicone steel plate; 23 adhesive; 25 corrosion preventive film; 33 can; 35 motor housing; 37 stator; L axis; M2 canned motor.

## Claims

1. A motor rotor (11) for use in a motor for driving a pump rotor rotating shaft of a vacuum pump comprising:
a rotor core made up of a plurality of steel plates (21) which are laminated in an axial direction and having through holes (17);
a permanent magnet (19) which is disposed in the through hole (17); and
end plates (15) which are attached to axial end portions of the rotor core;
**characterized in that**: the plurality of steel plates (21) are surface joined to each other and to the end plates (15) by cured adhesive (23) covering a whole surface of each of the plurality of steel plates (21), and **in that** the cured adhesive (23) is sealed with a resin material (25) that impregnates the adhesive (23).

2. The motor rotor (11) according to Claim 1, **characterized in that**: the adhesive also covers a whole of a joining surface of each of the end plates (15).

3. The motor rotor (11) according to Claim 1 or 2, **characterized in that**: the steel plates (21) of the rotor core are silicone steel plates.

4. The motor rotor (11) according to any of Claims 1 to 3, **characterized in that**: the end (15) plates are non-magnetic metal plates or resin plates.

5. The motor rotor (11) according to any of Claims 1 to 4, **characterized in that**: an axial length of the permanent magnet (19) is shorter than an axial length of the rotor core (11), and a predetermined end portion gap is formed between each end plate (15) and the permanent magnet (19), and wherein the adhesive (23) fills the gaps.

6. The motor rotor (11) according to any of Claims 1 to 5, **characterized in that**: the adhesive (23) fills a gap between a surface of the through hole (17) and the permanent magnet (19).

7. The motor rotor (11) according to any of Claims 1 to 6, **characterized in that**: the adhesive (23) is an anaerobic adhesive, a heat curable adhesive or a two component reaction curable adhesive.

8. The motor rotor (11) according to any of Claims 1 to 7, **characterized in that**: at least part of a surface of the motor rotor (11) is coated with a corrosion preventive film.

9. The motor rotor (11) according to any of Claims 1 to 7, **characterized in that**: a surface of the permanent magnet (19) is coated with a rust preventive film or a corrosion preventive film (19b, 19c).

10. The motor rotor (11) according to Claim 9, **characterized in that**: the rusting preventive or corrosion preventive film (19b, 19c) is made up of a plurality of layers of films, and wherein a non-pinhole coating is applied to at least one layer thereof with a film (19c) prepared by a CVD method using an anticorrosion resin.

11. The motor rotor (11) according to claim 1 **characterized by** an anaerobic adhesive (23) between the through hole (17) and the permanent magnet (19) and a heat curable adhesive (23) at least part between adjacent steel plates.

12. The motor rotor (11) according Claim 11, **characterized in that**: a surface of the permanent magnet (19) is coated with a film (19c) by a CVD method using an anticorrosion resin.

13. The motor rotor (11) according to Claim 12, wherein the film (19c) is a non-pinhole coating.

14. The motor rotor (11) according to Claim 12 or 13, having a rust preventive film or a corrosion preventive film (19b) between the permanent magnet (19) and the film (19c).

15. The motor rotor (11) according to any of Claims 11 to 14, wherein at least part of a surface of the motor rotor (11) is coated with a corrosion preventive film.

16. The motor rotor (11) according to Claim 1 **characterized in that** the permanent magnet (19) is divided into a plurality of magnets along the axial direction.

17. A canned motor (M2) comprising: the motor rotor (11) according to any of Claims 1 to 16; motor stators (37) which are disposed around the motor rotor (11) with a predetermined a gap; and a can (33) disposed between the motor rotor (11) and the motor stators (37).

18. A vacuum pump having a pump rotor rotating shaft (31) and comprising the canned motor (M2) according to Claim 17, wherein the motor rotor (11) is attached to an end portion of the pump rotor rotating shaft (31).

## Patentansprüche

1. Motorrotor (11) zur Verwendung in einem Motor zum Antreiben einer Pumpenrotordrehwelle einer Vakuumpumpe, der Folgendes aufweist:
einen Rotorkern, der aus einer Vielzahl von Stahlplatten (21) gemacht ist, die in einer axialen Richtung laminiert sind und Durchgangslöcher (17) haben;
einen Permanentmagneten (19), der in dem Durchgangsloch (17) angeordnet ist; und
Endplatten (15), die an axialen Endteilen des Rotorkerns angebracht sind; **dadurch gekennzeichnet, dass** die Vielzahl von Stahlplatten (21) an der Oberfläche miteinander und an den Endplatten (15) durch ein ausgehärtetes Klebemittel (23) verbunden sind, welches eine gesamte Oberfläche von jeder der Vielzahl von Stahlplatten (21) bedeckt, und dadurch, dass das ausgehärtete Klebemittel (23) mit einem Kunststoffmaterial (25) abgedichtet ist, welches das Klebemittel (23) imprägniert bzw. durchdringt.

2. Motorrotor (11) nach Anspruch 1, **dadurch gekennzeichnet, dass** das Klebemittel auch insgesamt eine Verbindungsfläche von jeder der Endplatten (15) bedeckt.

3. Motorrotor (11) nach Anspruch 1 oder 2, **dadurch gekennzeichnet, dass** die Stahlplatten (21) des Rotorkerns Siliziumstahlplatten sind.

4. Motorrotor (11) nach einem der Ansprüche 1 bis 3, **dadurch gekennzeichnet, dass** die Endplatten (15) nicht magnetische Metallplatten oder Kunststoffplatten sind.

5. Motorrotor (11) nach einem der Ansprüche 1 bis 4, **dadurch gekennzeichnet, dass** eine axiale Länge des Permanentmagneten (19) kürzer ist als eine axiale Länge des Rotorkerns (11), und dass ein vorbestimmter Endteilspalt zwischen jeder Endplatte (15) und dem Permanentmagneten (19) geformt ist, und wobei das Klebemittel (23) die Spalte füllt.

6. Motorrotor (11) nach einem der Ansprüche 1 bis 5, **dadurch gekennzeichnet, dass** das Klebemittel (23) einen Spalt zwischen einer Oberfläche des Durchgangsloches (17) und dem Permanentmagneten (19) füllt.

7. Motorrotor (11) nach einem der Ansprüche 1 bis 6, **dadurch gekennzeichnet, dass** das Klebemittel (23) ein anaerobes Klebemittel, ein durch Wärme aushärtbares Klebemittel oder ein durch eine Reaktion von zwei Komponenten aushärtbares Klebemittel ist.

8. Motorrotor (11) nach einem der Ansprüche 1 bis 7, **dadurch gekennzeichnet, dass** zumindest ein Teil einer Oberfläche des Motorrotors (11) mit einem Korrosion verhindernden Film beschichtet ist.

9. Motorrotor (11) nach einem der Ansprüche 1 bis 7, **dadurch gekennzeichnet, dass** eine Oberfläche des Permanentmagneten (19) mit einem Rost verhindernden Film oder einem Korrosion verhindernden Film (19b, 19c) beschichtet ist.

10. Motorrotor (11) nach Anspruch 9, **dadurch gekennzeichnet, dass** der Rost verhindernde oder Korrosion verhindernde Film (19b, 19c) aus einer Vielzahl von Schichten von Filmen aufgebaut ist, und wobei eine porenfreie Beschichtung auf mindestens eine Schicht davon aufgebracht ist, wobei ein Film (19c) durch ein CVD-Verfahren unter Verwendung eines Antikorrosionskunststoffes aufgebracht ist.

11. Motorrotor (11) nach Anspruch 1, **gekennzeichnet durch** ein anaerobes Klebemittel (23) zwischen dem Durchgangsloch (17) und dem Permanentmagneten (19) und ein durch Wärme aushärtbares Klebemittel (23) zumindest teilweise zwischen benachbarten Stahlplatten.

12. Motorrotor (11) nach Anspruch 11, **dadurch gekennzeichnet, dass** eine Oberfläche des Permanentmagneten (19) mit einem Film (19c) durch ein CVD-Verfahren unter Verwendung eines Antikorrosionskunststoffes beschichtet ist.

13. Motorrotor (11) nach Anspruch 12, wobei der Film (19c) eine porenfreie Beschichtung ist.

14. Motorrotor (11) nach Anspruch 12 oder 13, der einen Rost verhindernden Film oder einen Korrosion verhindernden Film (19b) zwischen dem Permanentmagneten (19) und dem Film (19c) hat.

15. Motorrotor (11) nach einem der Ansprüche 11 bis 14, wobei zumindest ein Teil einer Oberfläche des Motorrotors (11) mit einem Korrosion verhindernden Film beschichtet ist.

16. Motorrotor (11) nach Anspruch 1, **dadurch gekennzeichnet, dass** der Permanentmagnet (19) in eine Vielzahl von Magneten entlang der axialen Richtung unterteilt ist.

17. Spaltrohrmotor (M2), der Folgendes aufweist: den Motorrotor (11) nach einem der Ansprüche 1 bis 16; Motorstatoren (37), die um den Motorrotor (11) mit einem vorbestimmten Spalt angeordnet sind; und ein Rohr (33), welches zwischen dem Motorrotor (11) und den Motorstatoren (37) angeordnet ist.

18. Vakuumpumpe, die eine Pumpenrotordrehwelle (31) hat, und den Spaltrohrmotor (M2) gemäß Anspruch 17 aufweist, wobei der Motorrotor (11) an einem Endteil der Pumpenrotordrehwelle (31) angebracht ist.

## Revendications

1. Rotor de moteur (11) destiné à être utilisé dans un moteur pour entraîner un arbre rotatif de rotor de pompe d'une pompe à vide comprenant :
un noyau de rotor composé d'une pluralité de plaques d'acier (21) qui sont laminées dans une direction axiale et ayant des trous traversants (17) ;
un aimant permanent (19) qui est disposé dans le trou traversant (17) ; et
des plaques d'extrémité (15) qui sont fixées aux parties d'extrémité axiales du noyau de rotor ;
**caractérisé en ce que** : la pluralité de plaques d'acier (21) sont assemblées en surface les unes aux autres et aux plaques d'extrémité (15) par un adhésif durci (23) recouvrant toute une surface de chaque plaque de la pluralité de plaques d'acier (21), et **en ce que** l'adhésif durci (23) est scellé avec un matériau de résine (25) qui imprègne l'adhésif (23).

2. Rotor de moteur (11) selon la revendication 1, **caractérisé en ce que** : l'adhésif recouvre également toute une surface d'assemblage de chacune des plaques d'extrémité (15).

3. Rotor de moteur (11) selon la revendication 1 ou 2, **caractérisé en ce que** : les plaques d'acier (21) du noyau de rotor sont des plaques d'acier au silicone.

4. Rotor de moteur (11) selon l'une quelconque des revendications 1 à 3, **caractérisé en ce que** : les plaques d'extrémité (15) sont des plaques métalliques non magnétiques ou des plaques de résine.

5. Rotor de moteur (11) selon l'une quelconque des revendications 1 à 4, **caractérisé en ce que** : une longueur axiale de l'aimant permanent (19) est inférieure à une longueur axiale du noyau de rotor (11), et un espace de partie d'extrémité prédéterminé est formé entre chaque plaque d'extrémité (15) et l'aimant permanent (19), et dans lequel l'adhésif (23) remplit les espaces.

6. Rotor de moteur (11) selon l'une quelconque des revendications 1 à 5, **caractérisé en ce que** : l'adhésif (23) remplit un espace entre une surface du trou traversant (17) et l'aimant permanent (19).

7. Rotor de moteur (11) selon l'une quelconque des revendications 1 à 6, **caractérisé en ce que** : l'adhésif est un adhésif anaérobie, un adhésif durcissable à chaud ou un adhésif durcissable par réaction de deux composants.

8. Rotor de moteur (11) selon l'une quelconque des revendications 1 à 7, **caractérisé en ce que** : au moins une partie d'une surface du rotor de moteur (11) est recouverte d'un film anticorrosion.

9. Rotor de moteur (11) selon l'une quelconque des revendications 1 à 7, **caractérisé en ce que** : une surface de l'aimant permanent (19) est recouverte d'un film antirouille ou d'un film anticorrosion (19b, 19c).

10. Rotor de moteur (11) selon la revendication 9, **caractérisé en ce que** : le film antirouille ou anticorrosion (19b, 19c) est constitué d'une pluralité de couches de films, et dans lequel un revêtement non perforé est appliqué sur au moins une de ses couches avec un film (19c) préparé par un procédé CVD en utilisant une résine anticorrosion.

11. Rotor de moteur (11) selon la revendication 1, **caractérisé par** un adhésif anaérobie (23) entre le trou traversant (17) et l'aimant permanent (19) et un adhésif durcissable à chaud (23) au moins en partie entre des plaques d'acier adjacentes.

12. Rotor de moteur (11) selon la revendication 11, **caractérisé en ce que** : une surface de l'aimant permanent (19) est recouvert d'un film (19c) par un procédé CVD en utilisant une résine anticorrosion.

13. Rotor de moteur (11) selon la revendication 12, dans lequel le film (19c) est un revêtement non perforé.

14. Rotor de moteur (11) selon la revendication 12 ou 13, ayant un film antirouille ou un film anticorrosion (19b) entre l'aimant permanent (19) et le film (19c).

15. Rotor de moteur (11) selon l'une quelconque des revendications 11 à 14, dans lequel au moins une partie d'une surface du rotor de moteur (11) est recouverte d'un film anticorrosion.

16. Rotor de moteur (11) selon la revendication 1, **caractérisé en ce que** l'aimant permanent (19) est divisé en une pluralité d'aimants le long de la direction axiale.

17. Moteur à rotor noyé (M2) comprenant : le rotor de moteur (11) selon l'une quelconque des revendications 1 à 16 ; des stators de moteur (37) qui sont disposés autour du rotor de moteur (11) avec un espace prédéterminé ; et une chemise (33) disposée entre le rotor du moteur (11) et les stators du moteur (37) .

18. Pompe à vide ayant un arbre rotatif de rotor de pompe (31) et comprenant le moteur à rotor noyé (M2) selon la revendication 17, dans lequel le rotor de moteur (11) est fixé à une partie d'extrémité de l'arbre rotatif de rotor de pompe (31).
